Europäisches Patentamt

European Patent Office

Office européen des brevets

(11) Veröffentlichungsnummer: **0 247 289**
**A1**

(12) **EUROPÄISCHE PATENTANMELDUNG**

(21) Anmeldenummer: **87102567.2**

(22) Anmeldetag: **24.02.87**

(51) Int. Cl.⁴: **H02H 7/26 , H02H 3/08**

(30) Priorität: **08.03.86 DE 3607675**

(43) Veröffentlichungstag der Anmeldung:
**02.12.87 Patentblatt 87/49**

(84) Benannte Vertragsstaaten:
**AT BE CH DE ES FR GB IT LI NL**

(71) Anmelder: **Sachsenwerk Aktiengesellschaft**
**Einhauser Strasse 9**
**D-8400 Regensburg(DE)**

(72) Erfinder: **Stegmüller, Karl, Dipl.-Ing. (FH)**
**Galgenberg-West 11**
**D-8401 Wiesent(DE)**

(54) **Fehlerschutz für einen Mittelspannungs-Trafoabzweig.**

(57) Die in Trafoabzweigen eingesetzen Lastschalter haben zur Unterbrechung von Fehlerströmen meistens Schmelzleitersicherungen (sog. HH-Sicherungen) nachgeschaltet. Diese Sicherungen weisen eine Reihe von Nachteilen auf, die in manchen Fällen zu Störungen für die Energieversorgung geführt haben.

Es wird ein Fehlerschutz ohne die Anwendung von Sicherungen vorgeschlagen, bei dem der Lastschalter (11) so ausgelegt ist, daß er im unterem Fehlerschutzbereich vorkommende Störungen selbst unterbricht, während größere Fehlerströme, wie sie u.a. bei Kurzschlüssen in der Primärzuleitung des Trafos vorkommen, von einem übergeordneten, für einen größeren Netzteil vorgesehenen Leistungsschalter (31) abgeschaltet werden, während der Lastschalter den fehlerbehafteten Abzweig unmittelbar danach stromlos abtrennt.

Figur 1

EP 0 247 289 A1

## Fehlerschutz für einen Mittelspannungs-Trafoabzweig

Die Erfindung betrifft einen Fehlerschutz für einen Mittelspannungs-Trafoabzweig gemäß dem Oberbegriff des Patentanspruches 1.

Der Fehlerschutz von Mittelspannungs-Trafoabzweigen wird in den meisten Fällen durch eine Kombination von Lastschaltern mit Schmelzleitersicherungen (sogenannte HH-Sicherungen) vorgenommen, wobei die Lastschalter das Ein-und Ausschalten der Betriebsströme übernehmen, während die Sicherungen für den Schutz des Trafos gegen Überströme aller Art, insbesondere Kurzschlußströme, vorgesehen sind.

Der Einsatz von Schmelzleitersicherungen ist mit gravierenden Nachteilen verbunden, die in thermische Probleme und isolationstechnische Probleme unterteilbar sind.

a) Thermische Probleme.

Bis zu einem mehrfachen des Sicherungsnennstromes tritt keine sichere Unterbrechung des Stromes auf. In diesem Strombereich werden die Sicherungen jedoch thermisch überlastet, können bersten, was zu anschließenden Störlichtbögen in der Schaltanlage führt, oder zum Brandherd für umgebende Isolierstoffteile werden.

Solche thermischen Überlastungen führen auch zu Streuungen der Kennlinie. Kennlinienveränderungen werden auch durch Blitzeinschläge, die nicht zur sofortigen Auslösung der Sicherung führen bzw. durch häufige Einschaltvorgänge hervorgerufen. Die Folge solcher Kennlinienveränderungen können bei dreiphasigen Störungen einphasige Sicherungsunterbrechungen sein, wobei beim anschließenden Öffnen des Lastschalters die beiden anderen Phasen durch den Lastschalter abgeschaltet werden müssen. Viele der eingeführten Lastschalterprinzipien sind jedoch für derartige Fehlerstromunterbrechungen, die meist mit einem kleinen cos phi einhergehen, nicht geeignet.

b) Isolationstechnische Probleme

Die üblicherweise in Luft-oder Luft-Feststoffisolation eingebauten Schmelzleitersicherungen bilden vor allen Dingen in kleinen, nicht klimatisierten Netzstationen des öfteren die Ursache von Störungen. Deshalb wurde in der Vergangenheit versucht, in ölgefüllte Trafos sogenannte $I_k$ Unterbrecher einzubauen. Einzelheiten dieser Problematik sind in "Fabrikfertige, typgeprüfte, vollisolierte Kompaktstationen mit Transformatoren und $I_k$ - Unterbrechern", Elektrizitätswirtschaft Jahrgang 83 (1984) Heft 7, Seite 318 bis 321 beschrieben.

Die dabei verwendeten Transformatoren stellen jedoch Sonderkonstruktionen dar und werden von einer Reihe von Kunden nicht akzeptiert. Bei ausländischen Kunden sind derartige Lösungen bisher überhaupt nicht einsetzbar.

Um das Problem der Verfügbarkeit der Schaltanlagen zu verbessern, wurden in den letzten Jahren vollgekapselte, wartungsarme, z. B. mit $SF_6$-isolierte Lastschalteranlagen entwickelt. Dabei blieben jedoch die für den Trafoabzweig verwendeten Schmelzleitersicherungen aus wartungstechnischen Gründen in gesonderten, meist luftfeststoffisolierten Räumen angebaut. Dadurch entstand eine nicht systemkonforme Isolation, deren Problematik unter anderem in

"Schaltanlage für Ortsnetzverteiler-Stationen mit Vakuumleistungsschaltern, Elektrotechnische Zeitschrift Band 106 (1985) Heft 10"
angegeben ist. Als weiterer Nachteil dieses Konzepts muß auch die Vergrößerung der Abmessung durch den getrennten Raum für die Sicherungen angesehen werden, wie zum Beispiel aus der deutschen PS 3107 911 zu ersehen ist.

Die angegebenen Nachteile werden bei einer bekannten, mit $SF_6$-isolierten Schaltanlage für Ortsnetzverteilerstationen vermieden, bei der Vakuumleistungsschalter anstelle der Kombination von Lastschaltern mit Schmelzleitersicherungen im Trafoabzweig eingesetzt werden. Diese Schaltanlage ist in dem im letzten Abschnitt angegebenen Aufsatz näher beschrieben. Der Vakuumleistungsschalter übernimmt dabei die Unterbrechung aller Betriebs-und Fehlerströme, die durch Störungen im Trafo, aber auch in der Primärzuleitung auftreten können. Diese Lösung ist jedoch wegen der hohen Kosten der Vakuumleistungsschalter für den Einsatz in Netzstationen nicht als wirtschaftlich anzusehen.

Auf das problematische Verhalten von Hochspannungs-Hochleistungs-Sicherungen wurde auch in der Druckschrift DE OS 23 15 496 hingewiesen. Zur Lösung der Probleme wurde seinerzeit eine elektronische Schaltung vorgeschlagen, die im kritischen Strombereich der Sicherungen eine Auslösung des Lastschalters bewirkt und so eine Überlastung derselben vermeidet.

Der Schutz bei größeren Störströmen und Kurzschlußströmen bleibt jedoch den Sicherungen vorbehalten, so daß alle nachteiligen Isolationsprobleme und Fragen der Schaltanlagenabmessungen auch bei dieser Lösung bestehen bleiben.

Die Erfindung hat sich zur Aufgabe gestellt, den Fehlerschutz für einen Mittelspannungs-Trafoabzweig ohne Schmelzleitersicherungen auszuführen und dabei eine in wirtschaftlicher Hinsicht verbesserte, an die in den meisten Verteilernetzen üblichen Betriebsbedingungen angepaßte Lösung anzugeben. Diese Aufgabe wird erfindungsgemäß durch die Merkmale des ersten Patentanspruchs gelöst. Vorteilhafte Weiterbildungen sind den Unteransprüchen zu entnehmen.

Es sind neuere Mittelspannungs-Lastschalter bekannt, die über ein ausreichendes Schaltvermögen verfügen, um in Trafoabzweigen nicht nur Betriebsströme, sondern in einem gewissen Bereich auch Fehlerströme unterbrechen zu können. Dies gilt insbesondere für moderne Schalter, die mit SF₆-Löscheinrichtungen oder Vakuum-Lastschaltröhren ausgerüstet sind. Solche Schalter können nahezu alle im Trafo auftretenden Fehler abschalten; wobei die Fehlerströme dabei für kleine 24 kV-Netztransformatoren bis zu einigen hundert A bei cos φ -0,3 betragen können. Kurzschlüsse in den Zuleitungen zwischen Schaltanlage und Trafo erreichen z.B. in 24 kV-Netzen Werte von 10 kA und mehr und können von Lastschaltern nicht mehr unterbrochen werden.

Die Wahrscheinlichkeit solcher Störungen ist allerdings vor allem dann gering, wenn die Schaltanlage in Netzstationsgebäuden oder Kapselungen unmittelbar neben dem Trafo steht, die Verbindungsleitungen daher kurz und nicht den außerhalb des Gebäudes herrschenden Umgebungseinflüssen ausgesetzt sind Erfindungsgemäß werden diese Kurzschlüsse durch den für den Kurzschlußschutz des übergeordneten Netzabschnittes, z.B. der gesamten Ringleitung vorgesehenen Leistungsschalter unterbrochen,wobei unmittelbar danach der Lastschalter den fehlerbehafteten Abzweig stromlos abtrennt und der Leistungsschalter den restlichen fehlerfreien Teil des Netzabschnitts wieder zuschaltet. Die stromabhängige Auslösung des Lastschalters erfolgt dabei nach einem weiteren Merkmal der Erfindung mittels einer sehr einfachen, mit geringer Steuerleistung arbeitenden Überwachungseinrichtung. Das Wesen der Erfindung wird mit Hilfe folgender Figuren erläutert:

Fig. 1 Einpoliges Prinzipschaltbild eines Netzabschnitts mit einem Leistungsschalter und mehreren Trafoabzweigen.

Fig. 2 Arbeitsbereich des Lastschalters für einen Trafoabzweig.

Fig. 3 Überwachungseinrichtung für den Lastschalter.

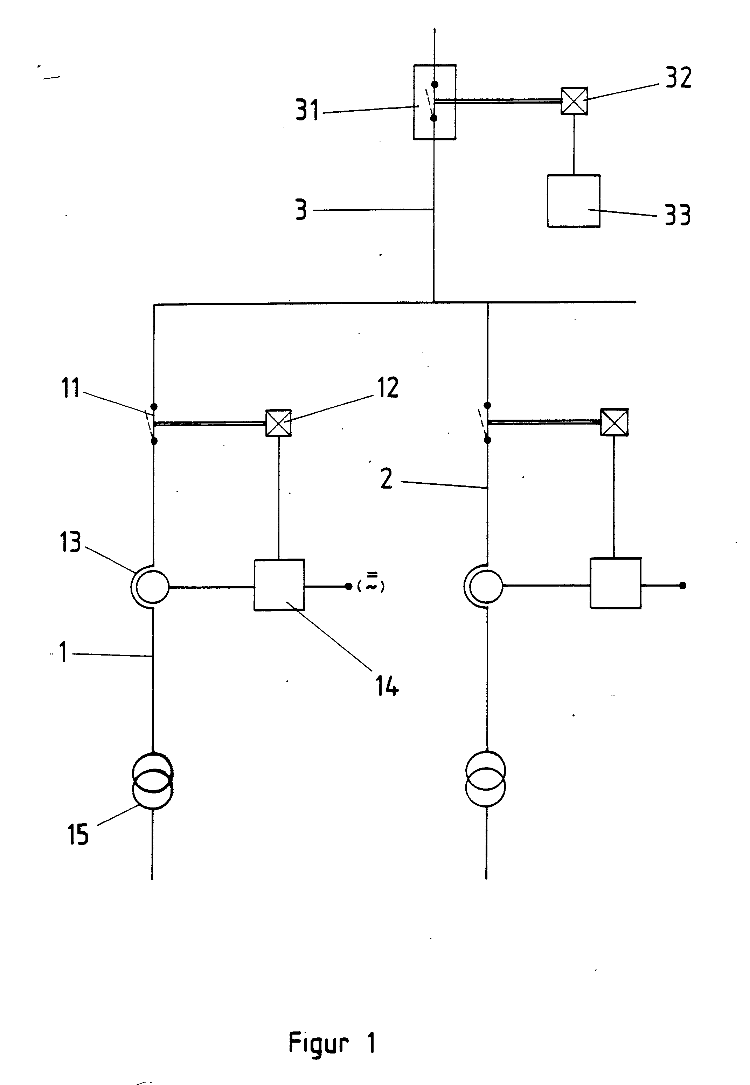

Der in Fig.1 dargestellte Netzabschnitt besteht aus 2 gleichartigen Trafoabzweigen 1 und 2, denen weitere Verbraucher parallelgeschaltet sein können, und einer mit einem Leistungsschalter bestückten Einspeisung 3. Jeder Trafoabzweig weist für den Betrieb des Trafos 15 einen Lastschalter 11 mit zugehörigem Energiespeicher 12, phasenweise angekoppelte Stromwandler 13, und eine dem Energiespeicher 12 vorgeschaltete elektronische Überwachungseinrichtung 14 auf. Auf den Energiespeicher 32 des Leistungsschalters 31 wirkt eine ansich bekannte, für Kurzunterbrechung geeignete Relais kombination 33.Die Stromwandler 13 sind als Ringkernwandler sehr geringer Kernleistung ausgeführt, an ihre Stelle können auch Stromsensoren treten.

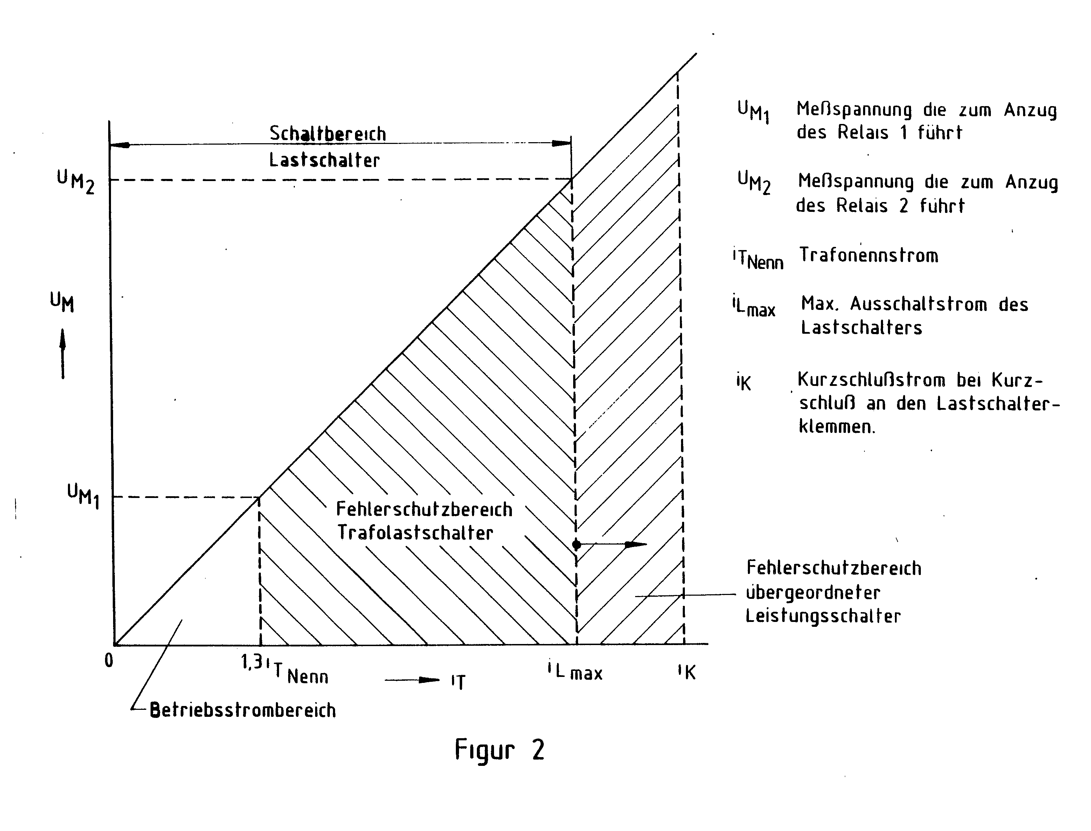

Der Lastschalter 11 hat nach Fig. 2 ein Schaltvermögen, das den Betriebsstrombereich des Trafos und den unteren Fehlerschutzbereich umfaßt. Bei einem Strom, der dem 1,3 fachen Trafonennstrom entspricht, beginnt der untere Fehlerschutzbereich, der beim größten zulässigen Ausschaltstrom $i_{Lmax}$ des Lastschalters endet.Noch größere Fehlerströme sind dem oberen Fehlerschutzbereich zugeordnet, sie werden vom vorgeschalteten Leistungsschalter 31 unterbrochen.

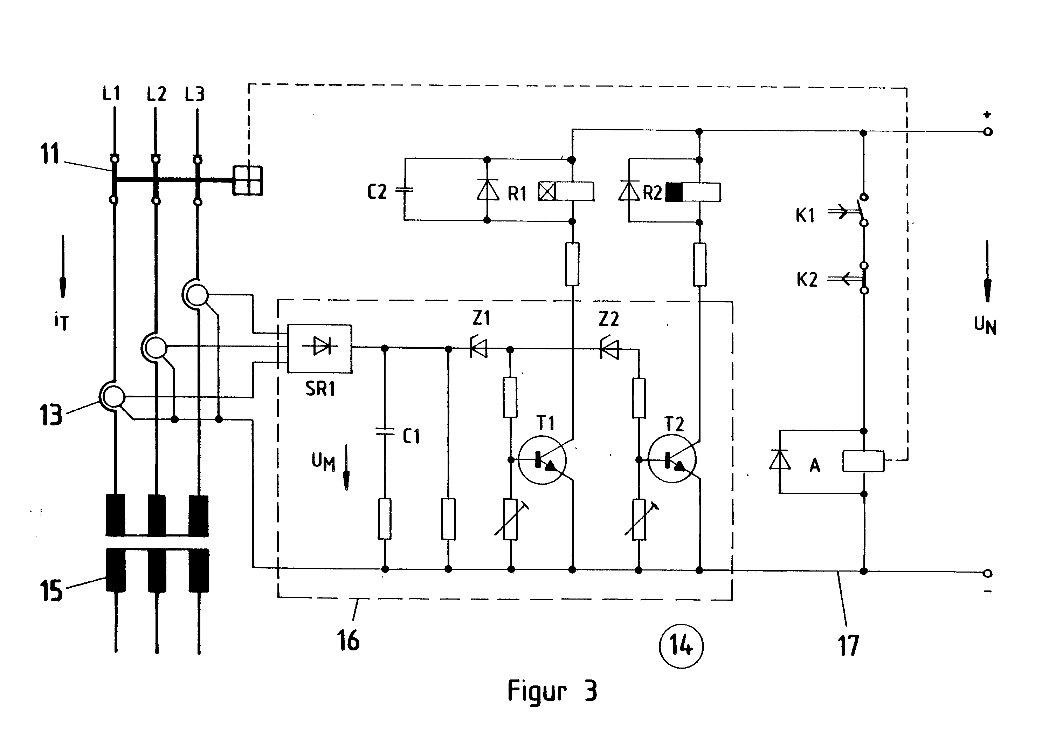

Die elektronische Überwachungseinrichtung 14 besteht nach Fig. 3 aus einem Steuerkreis 16 und einem Stromkreis 17 für die Auslösung. Von den Ringkernstromwandlern 13 wird eine Speicherkapazität C1 über die Stromrichter SR 1 aufgeladen, wobei an deren Klemmen eine dem Strom $i_T$ proportionale Spannung $U_M$ ansteht. Zur Speicherkapazität $C_1$ sind zwei mit über Schwellwertelemente $Z_1$ und $Z_2$ zu zündende Stellglieder $T_1$ und $T_2$ parallelgeschaltet. Die Schwellwertelemente können vorteilhaft als Zenerdioden und die Stellglieder als Transistoren ausgebildet sein. Erfindungsgemäß spricht das zum Stellglied $T_1$ im erstem Zweig gehörende Schwellwertelement $Z_1$ bei einer geringfügig über der dem 1,3 fachen Trafonennstrom (1,3 $i_{Tnenn}$) entsprechenden Spannung UM1 an und das dem Schwellwertelement $Z_1$ nachgeschaltete zum Stellglied $T_2$ im zweiten Zweig gehörende Schwellwertelement $Z_2$ bei einer geringfügig unter der dem maximalen Ausschaltstrom des Lastsschalters $i_{Lmax}$ entsprechenden Spannung $U_{M2}$.

Die Elektroden der Stellglieder $T_1$ und $T_2$ arbeiten mit je einem zum Auslösekreis 17 gehörenden Relais $R_1$ und $R_2$ zusammen. Der Auslösekreis wird vorteilhaft von einer unabhängigen Hilfsenergiequelle, z.B. einem Gleich-oder Wechselstomnetz, gespeist. Im Zweig des Auslösers A für den Lastschalter 11 befinden sich zwei mit ihm in Serie geschaltete Kontakte K1 und K2, wobei K1 als Schließkontakt des verzögert wirkenden Relais $R_1$ und K2 als Öffnungskontakt des unverzögert wirkenden Relais R2 ausgeführt ist. Die beiden Relais

$R_1$ und $R_2$ sind in 2 weiteren, parallel zum Auslöser A angeordneten Zweigen des Auslöserkeises, jeweils in Reihe mit den Elektroden der Stellglieder $T_1$ und $T_2$ geschaltet.

Bei Auftreten einer bleibenden Störung im unteren Fehlerschutzbereich wird an der Kapazität $C_1$ eine Spannung, die größer als $U_{M1}$ und kleiner als $U_{M2}$ ist, zur Durchzündung des Schwellwertelements $Z_1$ und somit zum Durchschalten des Stellgliedes T1 führen. Der aus dem Netz gespeiste Strom i $_n$betätigt nun das Relais R1 mit Verzögerung und schließt den Stromkreis des Auslösers A. Der Lastschalter 11 unterbricht mittels des Energiespeichers 12 den Fehlerstrom, worauf das Relais R1 abfällt und die Überwachungseinrichtung 14 in den Ausgangszustand zurückgeführt wird. Die vorgesehene Verzögerung am Relais R1 verhindert dabei lediglich durch den Einschaltstoßstrom des Trafos hervorgerufene Stromunterbrechungen.

Bei Auftreten eines Fehlerstromes im Trafoabzweig 1, der größer als i $_{Lmax}$ ist, wird an der Kapazität C1 eine Spannung anstehen, die größer als $U_{M2}$ ist, und zum Druckzünden beider Schwellwertelemente Z1 und Z2 führt. Daraufhin werden die beiden Stellglieder T1 und T2 durchgeschaltet und die beiden Relais R1 und R2 betätigt. Der unverzögerte Öffnungskontakt K2 unterbricht den Stromkreis des Auslösers A bevor der verzögerte Schließkontakt K1 zuschaltet. Der Auslöser A bleibt somit stromlos und der Lastschalter 11 eingeschaltet.

Gleichzeitig wird durch den Fehlerstrom die Relaiskombination 33 angeregt, was eine Auslösung des Leistungsschalters 31 und somit eine Unterbrechung des Fehlerstromes herbeiführt. Danach klingt die Spannung im Kondensator C1 rasch ab und die Stellglieder T1 und T2 unterbrechen die Verbindungen der Relais R1 und R2 mit dem Hilfsnetz. Daraufhin schließt der Öffnungskontakt K2 bevor der Schließkontakt K1 aufgrund des verzögerten Abfalls des Relais R1 öffnen kann; der Auslöser A wird erregt und der Lastschalter 11 trennt den fehlerbehafteten Trafoabzweig vom Netz ab, bevor der Leistungsschalter 31 wieder einschaltet.

Der Stromkreis 17 für die Auslösung des Lastschalters 11 kann nach einem weiteren Merkmal der Erfindung auch von einem nicht dargestellten, über ein beliebiges Netz aufgeladenen Kondensator im Falle von kurzzeitigen Spannungszusammenbrüchen des Netzes sicher gespeist werden. Die Aufladung kann dabei auch mittels geeigneter Übersetzung von den Zuleitungen des Trafos 15 erfolgen.

**Ansprüche**

1. Fehlerschutz für einen Mittelspannungs-Trafoabzweig mit Stromunterbrechern zum Ein-und Ausschalten von Betriebsströmen und zum Schutz des Abzweigs gegen Fehlerströme
**dadurch gekennzeichnet,**
daß anstelle von Schmelzleitersicherungen in einem unteren Fehlerschutzbereich der zum Schalten der Betriebsströme des Trafoabzweigs eingesetzte erste Stromunterbrecher und im oberen Fehlerschutzbereich der für einen Netzabschnitt von mindestens 2 oder mehreren Abzweigen als Schutz gegen Kurzschlußströme angeordnete zweite Stromunterbrecher die Schutzfunktion übernimmt und daß eine von der Größe des Fehlerstromes beeinflußte Überwachungseinrichtung die Auslösung des ersten Stromunterbrechers im unteren Fehlerschutzbebereich freigibt und im oberen Fehlerschutzbereich sperrt.

2. Fehlerschutz für einen Mittelspannungs-Trafoabzweig nach Anspruch 1,
**dadurch gekennzeichnet,**
daß der erste, im Trafoabzweig eingesetzte Stromunterbrecher ein Lastschalter (11) mit einem mindestens den unteren Fehlerschutzbereich beherrschenden Schaltvermögen ist und daß der zweite, übergeordnete Stromunterbrecher ein Leistungsschalter (31) mit einem alle in seinem nachgeschalteten Netzabschnitt auftretenden Kurzschlußströme beherrschenden Schaltvermögen ist.

3. Fehlerschutz für einen Mittelspannungs-Trafoabzweig nach Anspruch 1 und 2
**dadurch gekennzeichnet,**
daß der Leistungsschalter (31) bei der Fehlerbeseitigung im oberen Fehlerschutzbereich des Trafoabgangs nach kurzer Unterbrechungszeit wieder einschaltet, wobei der Lastschalter (11) in der spannungslosen Pause den fehlerbehafteten Abzweig (1) abtrennt.

4. Fehlerschutz für einen Mittelspannungs-Trafoabzweig nach Anspruch 1
**dadurch gekennzeichnet,**
daß die Überwachungseinrichtung (14) aus einem von einer mit der Trafozuleitung (1) gekoppelten Energiequelle gespeisten, mit elektronischen Bauelementen und Stellglie dern bestückten Steuerkreis (16) und einem an eine unabhängige Energiequelle angeschlossenen vorzugsweise mit zwei Relais bestückten Stromkreis (17) für den Auslöser (A) des Lastschalters (11) besteht, dessen Anregung durch von der Größe des Fehlerstromes abhängige Signale über elektronische Stellglieder erfolgt.

5. Fehlerschutz für einen Mittelspannungs-Trafoabzweig nach Anspruch 4
**dadurch gekennzeichnet,**
daß der Steuerkreis (16)
-aus Ringkernstromwandlern (13) geringer Leistung oder Stromsensoren gespeist wird, die über Stromrichter (SR1) eine Speicherkapazität ($C_1$) mit einer dem Strom ($i_T$) in den Trafozuleitungen proportionalen Spannung ($U_M$) aufla den, und

-aus zwei der Speicherkapazität ($C_1$) parallelgeschalteten Zweigen mit über Schwellwertelemente ($Z_1, Z_2$) zu zündende Stellglieder (T1, T2) bestehen, wobei das Schwellwertelement ($Z_1$) im ersten Zweig bei einer geringfügig über dem zum 1,3 fachen Wert des Trafonennstromes ($i_{Tnenn}$) gehörenden Spannung ($U_{M1}$) anspricht und das dem Schwellwertelement ($Z_1$) nachgeschaltete Schwellwertelement ($Z_2$) des zweiten Zweiges geringfügig unter der zum maximalen Ausschaltstrom ($i_{Lmax}$) des Lastschalters gehörenden Spannung ($U_{M2}$) anspricht.

6. Fehlerschutz für einen Mittelspannungs-Trafoabzweig nach Anspruch 4 und 5
**dadurch gekennzeichnet,**
daß die Schwellwertelemente ($Z_1, Z_2$) Zenerdioden und die Stellglieder (T1, T2) Transistoren sind, deren Elektroden mit jeweils einem Zweig des Auslösekreises (17) zusammenwirken.

7. Fehlerschutz für einen Mittelspannungs-Trafoabzweig nach Anspruch 4,
**dadurch gekennzeichnet,**
daß der aus einem Gleich-oder Wechselstromnetz über Gleichrichter gespeiste Stromkreis (17) für die Auslösung

-in einem Zweig den Auslöser (A) des Lastschalters (11) mit den in Serie geschalteten, von den Relais(R1) bzw. (R2) betätigbaren Kontakten (K1) bzw. (K2) beinhaltet,

-in einem zweiten, zum ersten parallel geschalteten Zweig das den Öffnungskontakt (K2) betätigende unverzögerte Relais (R2) in Serie mit dem Stellglied (T2) und

-in einem dritten, zu den beiden anderen Zweigen parallel geschalteten Zweig das den Schließkontakt (K1) betätigende, verzögernd wirkende Relais (R1) in Serie mit dem Stellglied (T1) aufweist.

8. Fehlerschutz für einen Mittelspannungs-Trafoabzweig nach Anspruch 1 bis 3,
**dadurch gekennzeichnet,**
daß der übergeordnete Leistungsschalter (31) mit einer für Kurzunterbrechung geeigneten Relaiskombination (33) gesteuert wird.

9. Fehlerschutz für einen Mittelspannungs-Trafoabzweig nach Anspruch 1 - 8,
**dadurch gekennzeichnet,**
daß die spannungslose Pause des Leistungsschalters (31) bei Kurzunterbrechung größer als die Gesamtausschaltzeit des Lastschalters (11) ist.

10. Fehlerschutz für einen Mittelspannungs-Trafoabzweig nach Anspruch 1 - 8
**dadurch gekennzeichnet,**
daß die durch ein Verzögerungsglied beeinflußte Schließzeit des Schließkontaktes (K1) größer als die Gesamtausschaltzeit des Leistungsschalters (31) ist.

11. Fehlerschutz für einen Mittelspannungs-Trafoabzweig nach Anspruch 4
**dadurch gekennzeichnet,**
daß die unabhängige Energiequelle für den Stromkreis (17) aus einem Kondensator mit vorgeschaltetem Widerstand besteht, der aus einem Gleichspannungsnetz oder aus einem Wechselspannungsnetz über Gleichrichter aufgeladen wird und die Auslösung des Lastschalters (11) auch bei kurzzeitigem Netzausfall sicherstellt.

Figur 1

Figur 2

Figur 3

L1  L2  L3

11

iT

13

15

16

C2  R1  R2

Z1  Z2

SR1

UM

C1

T1  T2

K1

K2

UN

A

14  17

0 247 289

# EUROPÄISCHER RECHERCHENBERICHT

Nummer der Anmeldung

EP 87 10 2567

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 111 255 (KARL PFISTERER GMBH) <br> * Anspruch 1, Figur 1 * | 1,2 | H 02 H 7/26 <br> H 02 H 3/08 |
| A | | 3 | |
| | --- | | |
| Y | US-A-3 211 958 (R.H. MILLER et al.) <br> * Figur * | 4-6,9 | |
| | --- | | |
| Y,D | DE-A-2 315 496 (KRONE GMBH) <br> * Figur * | 4-6,9 | |
| | --- | | |
| A | GB-A-2 054 964 (HAZEMEIJER B.V.) <br> * Seite 3, Zeilen 29-105; Figur 1 * | 1-3 | |
| | --- | | |
| A | DE-A-2 347 123 (MERLIN GERIN) <br> * Anspruch 1, Figur 1 * | 1-2 | |
| | --- | | |
| A | ETZ, Band 106, Nr. 10, 1985, Seiten 498-502; H. KOTULLA et al.: "Niederspannungs-Stromversorgung in der Industrie" <br> * Seite 499, Absatz Hochspannungsseitiger Energietransport * | 1-3 | |
| | --- -/- | | |

RECHERCHIERTE SACHGEBIETE (Int. Cl.4)

H 02 H 1/04
H 02 H 3/08
H 02 H 7/26

Der vorliegende Recherchenbericht wurde für alle Patentansprüche erstellt.

| Recherchenort | Abschlußdatum der Recherche | Prüfer |
|---|---|---|
| BERLIN | 10-08-1987 | LEMMERICH J |

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | ETZ, Band 106, Nr. 10, 1985, Seiten 500-504; C. BéTTGER et al.: "Schaltanlage für Ortsnetzverteilerstationen mit Vakuum-Leistungsschalter"Seiten 504-506 | | |

-----

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 10-08-1987 | LEMMERICH J |